# EUROPEAN PATENT SPECIFICATION

(11) **EP 3 274 399 B1**
(45) Date of publication and mention of the grant of the patent: **29.09.2021**
(21) Application number: 16733748.4
(22) Date of filing: 23.03.2016
(51) Int. Cl.: C08J 7/04

(54) **OVERCOATED WATER-SOLUBLE FILMS**
BESCHICHTETE WASSERLÖSLICHE FILME
FILMS SOLUBLES DANS L'EAU REVÊTUS

(30) Priority: 27.03.2015 US 201562139069 P
(43) Date of publication of application: 31.01.2018
(73) Proprietor: Rohm and Haas Company, Philadelphia, PA 19106 (US); Dow Global Technologies LLC, Midland, MI 48674 (US)
(72) Inventor: JIN, Xin, Freeport, TX 77541 (US); KARIKARI, Afua Sarpong, Collegeville, PA 19426 (US); SONNENSCHEIN, Mark F., Midland, MI 48674 (US)
(74) Representative: Houghton, Mark Phillip
(86) International application number: PCT/US2016/023747
(87) International publication number: WO 2016/160449

(56) References cited:
- EP-A1- 0 513 692
- EP-A2- 0 457 600
- WO-A1-97/37903
- JP-A- H02 108 534
- US-A- 2 760 942
- US-A- 4 765 916
- US-A- 5 429 874
- DATABASE WPI Week 201141 Thomson Scientific, London, GB; AN 2011-G62365 XP002761371, & JP 2011 116430 A (KURARAY CO LTD) 16 June 2011 (2011-06-16)

## Description

This invention relates to a water-soluble or water-dispersible film having a water-soluble coating for increased chemical resistance.

Polyvinyl alcohol (PVOH) films are commonly used in unit dose packages. The PVOH films are able to provide acceptable water solubility, good mechanical strength, toughness, impact resistance. However, the water solubility of PVOH films deteriorates when the films are exposed to certain chemicals, such as chlorine-containing substances, oxidizing chemicals, acid chemicals, alkali chemicals, salts with polyvalent metals, boric acid, polyamines, insecticides, herbicides, among others. This water solubility decrease limits the practical applications of PVOH unit dose packages with those chemicals, which are often used as bleaching agents, laundry detergents, industrial chemicals, pool chemicals and agrochemical products. Water-soluble films having a water-soluble coating are known, as in, e.g., US5362532, which describes a coating of an alkyl acrylate/methacrylic acid copolymer on a PVOH film. The film was used to make a pouch for dispersing laundry detergent with the acid-functional polymer on the inside to impart resistance to the pouch contents. However, this reference does not suggest a film for increasing chemical resistance of water-soluble polymer films.

JP-A-2011116430 discloses a water-soluble multilayer film for acidic or alkaline substance packaging. US 5429874 and EP 0457600 disclose water soluble films. WO 97/37903 discloses a water soluble bag packaging system and method for packaging. EP 513692 discloses a water soluble bag multilayer film for packaging alkaline materials. US 2760942 discloses a heat-sealable coating consisting of polyvinyl alcohol, urea and dextrose. JP -A-02-108534 discloses a laminated film which is soluble in cold water. US 4765916 discloses a polymer film composition for rinse release of wash additives.

The problem solved by this invention is the need for water-soluble or water-dispersible films having a water-soluble coating for increased chemical resistance.

### STATEMENT OF INVENTION

The present invention provides a multilayer film comprising: (a) a layer of a first polymer comprising polymerized units of vinyl alcohol; and (b) a layer of a second polymer selected from the group consisting of maleic anhydride-isobutylene copolymers, neutralized maleic anhydride-isobutylene copolymers, chemically modified maleic anhydride-isobutylene copolymers, and mixtures thereof.

### DETAILED DESCRIPTION

Percentages are weight percentages (wt%) and temperatures are in °C, unless specified otherwise. Operations were performed at room temperature (20-25 °C), unless specified otherwise. Percentages of monomer units in copolymers are based on total weight of the polymer chains. The term "(meth)acrylic" means methacrylic or acrylic. Mixtures of copolymers may be physical mixtures of polymers or polymers made from a combination of all monomers in the copolymers.

The first polymer may be water-soluble or water-dispersible, the latter referring to films having materials in the water-soluble film structure which are not fully water-soluble; films with materials which are water-soluble only at relatively high water temperatures or only under limited pH conditions; and films which include some portion of water-insoluble material, such as a relatively thin layer of water-insoluble material.

Preferably, the first polymer, which comprises polymerized units of vinyl alcohol is a partially hydrolyzed polymer of vinyl acetate in which some units of vinyl acetate have hydrolyzed to units of vinyl alcohol. Preferably, the % hydrolysis, which corresponds to the mole % of vinyl alcohol units, is at least 60 mole %, preferably at least 70 mole %, preferably at least 80 mole%, preferably at least 85 mole%, preferably at least 90 mole%, preferably at least 95 wt%. Preferably, the % hydrolysis is no greater than 98 mole %, preferably no greater than 97 mole t%, preferably no greater than 95 mole %, preferably no greater than 93 mole %, preferably no greater than 92 mole %. Preferably, the number-average molecular weight (Mw) of the first polymer is from 5,000 to 500,000; preferably at least 7,000; preferably no greater than 400,000: preferably no greater than 300,000; preferably no greater than 250,000. The first polymer may contain small amount of polymerized units of monomers other than vinyl alcohol and vinyl acetate, preferably no more than 10%, preferably no more than 5%, preferably no more than 3%, preferably no more than 2%, preferably no more than 1%. Other monomers may include, e.g., carboxylic acid monomers and their alkyl esters.

The term "chemically modified" refers to a polymer having acid functionality (e.g., units of maleic acid or (meth)acrylic acid) which has been allowed to react with a mono-functional compound having a hydroxyl or amino group. Preferred mono-functional compounds having a hydroxyl group include ethylene and propylene glycols and their oligomers, polymers and polymers which are capped on one end with a C₁-C₄ alkyl group; preferably the polymers and copolymers have Mn no greater than 20,000, preferably no greater than 10,000. Preferred mono-functional compounds having an amino group include JEFFAMINE M series amines, which are ethylene and propylene glycol copolymers having a terminal amino group and which are capped with a methyl group on the terminal hydroxyl group.

Preferred second polymers include maleic anhydride-isobutylene copolymers, neutralized maleic anhydride-isobutylene copolymers, and chemically modified maleic anhydride-isobutylene copolymers.

Preferably, the multilayer film is in the form of a pouch (i.e., a closed container formed from the multilayer film) in which the layer of polymer comprising polymerized units of vinyl alcohol is on the outside of the pouch. Preferably, the pouch is sealed and contains a mixture comprising a bleaching agent. In one preferred embodiment the mixture comprises no more than 20 wt% water, preferably no more than 15 wt%, preferably no more than 10 wt%, preferably no more than 5 wt%. The mixture may also comprise glycols, preferably propylene glycol, in an amount from 1 to 20 wt% of the mixture, preferably 1 to 10 wt%. The pouch is intended to open up and disperse when added to an aqueous medium at a temperature from 10 to 80 °C, preferably 15 to 60 °C. Preferably, the sealed pouch containing the bleaching agent is added to a dishwashing machine or clothes washer, preferably a dishwashing machine.

A bleaching agent is an oxidizing agent suitable for use in an aqueous medium, preferably in a washing machine. Preferred bleaching agents include peroxides such as barium peroxide, sodium carbonate peroxide, calcium peroxide, hydrogen peroxide, lithium peroxide, magnesium peroxide, strontium peroxide, zinc peroxide, and sodium peroxide; ketone peroxides such as acetone peroxide, methyl ethyl ketone peroxide, and benzoyl peroxide; nitrates such as aluminum nitrate, potassium nitrate, silver nitrate, calcium nitrate, sodium nitrate, cupric nitrate, lead nitrate, magnesium nitrate, strontium nitrate, nickel nitrate, and guanidine nitrate; nitrites such as sodium nitrite; chromates and dichromates such as potassium dichromate, sodium dichromate, and ammonium dichromate; persulfates such as ammonium persulfate, potassium persulfate and sodium persulfate; perborates such as sodium perborate; perbromates and bromates such as potassium bromate and sodium bromate; permanganates such as potassium permanganates, sodium permanganate, and ammonium permanganate; chlorates and perchlorates including barium chlorate, calcium chlorate, sodium perchlorate (monohydrate), strontium chlorate, magnesium perchlorate, zinc chlorate, sodium chlorate, ammonium perchlorate and potassium chlorate; periodates such as sodium periodate and potassium periodate; chlorites and hypochlorites such as lithium hypochlorite, calcium hypochlorite, and sodium chlorite; chlorinated and/or brominated isocyanurates such as sodium dichoroisocyanuric acid, potassium dichloroisocyanuric acid, and trichloroisocyanuric acid; inorganic acids such as nitric acid, chromic acid, and perchloric acid; peroxy acids such as meta-chloroperoxybenzoic acid; bromine, chlorine, iodine and fluorine; potassium superoxide; hydrates of any of the preceding; and combinations of any of the preceding. Preferably, the bleaching agent is calcium hypochlorite or sodium dichloroisocyanurate.

Preferably, maleic anhydride-isobutylene copolymers comprise from 40 to 60 mole % each of maleic anhydride and isobutylene, preferably from 45 to 55 mole %, preferably from 48 to 52 mole %. Preferably, maleic anhydride-isobutylene copolymers are alternating copolymers. Preferably, maleic anhydride-isobutylene copolymers have Mw from 5,000 to 500,000; preferably at least 8,000; preferably at least 10,000; preferably at least 50,000; preferably at least 100,000; preferably no greater than 300,000; preferably no greater than 200,000.

In one preferred embodiment of the invention, the multilayer film comprises a layer of a third polymer selected from the group consisting of maleic anhydride-isobutylene copolymers, neutralized maleic anhydride-isobutylene copolymers, chemically modified maleic anhydride-isobutylene copolymers, ethylene -acrylic acid copolymer, neutralized ethylene -acrylic acid copolymer, polyvinylpyrrolidone, poly (vinyl methyl ether), cellulose, methyl cellulose, hydroxyethyl cellulose, poly(methyl)acrylic acid, poly(ethylene glycol), polyacrylamine, poly(2-hydroxyethyl acrylate, and mixtures thereof; wherein the first and second layers are on opposite sides of the layer of polymer comprising polymerized units of vinyl alcohol.

Preferably, the amount of crosslinker in the ethylene-(meth)acrylic acid copolymer is no greater than 0.15 wt%, preferably no greater than 0.1 wt%, preferably no greater than 0.05 wt%, preferably no greater than 0.02 wt%; all percentages based on dry polymer. A crosslinker is a polymerized unit of a multiethylenically unsaturated monomer or a metal ion selected from the group consisting of Zn⁺², Ca⁺², Mg⁺² and Al⁺³. Percentages of metal ions are based on metal alone, without the anion.

Preferably, the thickness of the layer of polymer comprising polymerized units of vinyl alcohol is from 25 to 500 µm; preferably at least 40 µm, preferably at least 50 µm; preferably no greater than 300 µm, preferably no greater than 200 µm, preferably no greater than 100 µm. Preferably, the thickness of the layer of polymer selected from the group consisting of maleic anhydride-isobutylene copolymers, neutralized maleic anhydride-isobutylene copolymers, chemically modified maleic anhydride-isobutylene copolymers, ethylene -acrylic acid copolymer, neutralized ethylene -acrylic acid copolymer, polyvinylpyrrolidone, poly (vinyl methyl ether), cellulose, methyl cellulose, hydroxyethyl cellulose, poly(methyl)acrylic acid, poly(ethylene glycol), polyacrylamine, poly(2-hydroxyethyl acrylate, and mixtures thereof is from 0.1 to 25 µm, preferably at least 0.5 µm, preferably at least 1 µm, preferably at least 2 µm, preferably at least 3 µm; preferably no greater than 20 µm, preferably no greater than 15 µm, preferably no greater than 10 µm.

Preferably, one or more layers are added to a film comprising polymerized units of vinyl alcohol using conventional coating methods, including blade, web, spray, knife, rod, kiss, slot, painting, printing, and combinations thereof. The layers may also be added using a solvent-free powder coating process.

### EXAMPLES

### Example 1. Preparation of a coating solution with an ammonium modified maleic anhydride-isobutylene copolymer

Weighed 100 grams of ISOBAM 110, which is an amide-ammonium salt of maleic anhydride-isobutylene product (alternating copolymer, Mw=165,000) from Kuraray Co., Ltd, and 400 grams of deionized water in a 500ml 3-neck round flask with a condenser and a mechanical agitation. The mixture was agitated at moderate speed at room temperature overnight. A clear homogeneous solution was obtained. It is a 20 wt% solution and ready for the coating application.

### Example 2. Preparation of a coating solution with a neutralized maleic anhydride-isobutylene copolymer

Weighed 100 grams of ISOBAM 10, which is a maleic anhydride-isobutylene product (alternating copolymer, Mw=165,000) from Kuraray Co., Ltd, 51.8 grams of sodium hydroxide and 549 grams of deionized water in a 500ml 3-neck round flask with a condenser and a mechanical agitation. The mixture was agitated at moderate speed in an oil bath at 80 C for 6 hours. A clear homogeneous solution was obtained. It is a 100% neutralized 20 wt% polymer solution. After cooling to room temperature, the solution is ready for the coating application.

### Example 3. Preparation of a coating solution with a neutralized maleic anhydride-isobutylene copolymer

Weighed 100 grams of ACUSOL 460ND, which is a neutralized maleic anhydride-isobutylene product (alternating copolymer, Mw= 10,000) from the Dow Chemical Company, and 400 grams of deionized water in a 500ml 3-neck round flask with a condenser and a mechanical agitation. The mixture was agitated at moderate speed at room temperature for 2 hours. A clear homogeneous solution was obtained. It is a 20 wt% solution and ready for the coating application.

### Example 4. Overcoating on the top of a PVOH film substrate

A PVOH based thermoplastic film, MonoSol M8630 supplied by MonoSol, a Kuraray Company (approximately 87-89% hydrolyzed), was chosen as the coating substrate in the example experiment. The thickness of the MonoSol M8630 film is about 75 µm (3 mil). A piece of the MonoSol M8630 film was cut to about 15 cm by 25 cm (6" by 10") and fixed with tapes on the top of a glass substrate. The coating solutions prepared in Example 1-3 were overcoated on the top of the MonoSol M8630 film by a 25 µm (1mil) 3" wide coating blade, respectively. The coating formulations are shown in Table 1. The glass substrates with overcoated PVOH films were put into an oven at 40 °C with constant N2 flow. The overcoated films were taken out of the oven after 40 minutes. The thickness of Coating A, B and C is around 5 µm. The obtained bilayer films coatings are ready to evaluate.

**Table 1. Coating formulations:**

| Coating# | **A** | **B** | **C** |
|---|---|---|---|
| Solutions | **Example 1** | **Example 2** | **Example 3** |
| Solid content (%) | 20 | 20 | 20 |
| Coating blade# | 1 | 1 | 1 |

The water dispersibility of the overcoated bilayer films were measured by the dissolving of a piece of 2cmxlcm film in about 15 ml of DI water. All A, B, C coatings and the M8630 film control are fully soluble after 2 minutes at room temperature with mild agitation. After stretched by hand to 200% elongation, all A, B and C coatings do not show apparent coating delamination and mechanical failure.

The aggressive chemical resistance of the overcoated films was illustrated by the contact of calcium hypochlorite at 120 F. The overcoated bilayer films, A, B and C, were cut to fit in a 10 cm (4") wide glass dishpan, respectively. Part of the overcoated areas was covered by near 100% pure calcium hypochlorite powder. The dishpans with bilayer films and calcium hypochlorite were placed on a metal frame in a 49 °C (120 °F) oven for 14 days. The uncoated M8630 film was also treated under the same condition as a comparative control. The bilayer films and the M8630 film were taken out of the oven after 14 days. The water dispersibility of those films was measured and the results are shown in Table 2.

**Table 2. Water dispersibility of films before and after hypochlorite treatment**

| Film # | **A** | **B** | **C** | M8630 control |
|---|---|---|---|---|
| Before hypochlorite treatment | fully dispersible | fully dispersible | fully dispersible | fully dispersible |
| After hypochlorite treatment | partially dispersible | fully dispersible | partially dispersible | not dispersible |

It was found that the uncoated M8630 control film after hypochlorite treatment remains as a whole piece of film without any apparent solubility or dispersibility. Coating# B remains fully water dispersible and Coating A and C become partially water dispersible after hypochlorite treatments. The experimental results demonstrate that the overcoatings in our invention are able to improve the aggressive chemical resistance of the PVOH film effectively.

The mechanical properties of the overcoat bilayer films and the uncoated M8630 control film were quantified by their tensile properties. These quantities were determined using a H5KS Tinius Olsen Universal Testing Machine, and by using the ASTM D 882, "Standard Test Method for Tensile Properties of Thin Plastic Sheeting".
The tensile measurement results are shown in Table 3.

**Table 3. Tensile measurement results of bilayer films and M8630 control**

| Film # | **A** | **C** | **M8630** |
|---|---|---|---|
| Elongation @ | | | |
| Break(%) | 339 | 362 | 347 |
| Modulus (MPa) | 85 | 49 | 135 |
| Max Stress(MPa) | 24 | 18 | 56 |
| Toughness (MJ/m³) | 47 | 33 | 108 |

The tensile results illustrate that the overcoatings in this invention do not decrease the film flexibility. Both coating A, C and M8630 film control provide over 300% elongation at break. The modulus, max stress and toughness of those overcoated bilayers are lower than the M8630 control, but they are still acceptable for the targeted applications. The examples in this document demonstrate that the new overcoated films can be applied in unit dose packaging with aggressive chemicals.

## Claims

1. A multilayer film comprising: (a) a layer of a first polymer comprising polymerized units of vinyl alcohol; and (b) a layer of a second polymer selected from the group consisting of maleic anhydride-isobutylene copolymers, neutralized maleic anhydride-isobutylene copolymers, chemically modified maleic anhydride-isobutylene copolymers, and mixtures thereof.

2. The multilayer film of claim 1 in which the layer of the first polymer has a thickness from 25 to 500 µm and the layer of the second polymer has a thickness from 0.1 to 25 µm.

3. The multilayer film of claim 2 in which the second polymer is an alternating copolymer.

4. The multilayer film of claim 3 which is a pouch in which an inside surface is completely covered with the second polymer.

5. The pouch of claim 4 comprising a bleaching agent.

6. The pouch of claim 5 in which the bleaching agent comprises calcium hypochlorite or sodium dichloroisocyanurate.

7. The multilayer film of claim 1 or claim 2 which is in the form of a pouch in which the layer of polymer comprising polymerized units of vinyl alcohol is on the outside of the pouch.

8. The multilayer film of claim 7 wherein the pouch is sealed and comprises a bleaching agent.

9. The multilayer film of claim 8 in which the bleaching agent comprises calcium hypochlorite or sodium dichloroisocyanurate.

## Patentansprüche

1. Eine Mehrschichtfolie, die Folgendes beinhaltet: (a) eine Schicht eines ersten Polymers, das polymerisierte Vinylalkoholeinheiten beinhaltet; und (b) eine Schicht eines zweiten Polymers, ausgewählt aus der Gruppe, bestehend aus Maleinsäureanhydrid-Isobutylen-Copolymeren, neutralisierten Maleinsäureanhydrid-Isobutylen-Copolymeren, chemisch modifizierten Maleinsäureanhydrid-Isobutylen-Copolymeren und Mischungen davon.

2. Mehrschichtfolie gemäß Anspruch 1, wobei die Schicht des ersten Polymers eine Dicke von 25 bis 500 µm aufweist und die Schicht des zweiten Polymers eine Dicke von 0,1 bis 25 µm aufweist.

3. Mehrschichtfolie gemäß Anspruch 2, wobei das zweite Polymer ein alternierendes Copolymer ist.

4. Mehrschichtfolie gemäß Anspruch 3, die ein Beutel ist, wobei eine innere Oberfläche vollständig mit dem zweiten Polymer bedeckt ist.

5. Beutel gemäß Anspruch 4, der ein Bleichmittel beinhaltet.

6. Beutel gemäß Anspruch 5, wobei das Bleichmittel Calciumhypochlorit oder Natriumdichlorisocyanurat beinhaltet.

7. Mehrschichtfolie gemäß Anspruch 1 oder Anspruch 2, die in Form eines Beutels vorliegt, wobei die Polymerschicht, die polymerisierte Vinylalkoholeinheiten beinhaltet, auf der Außenseite des Beutels befindlich ist.

8. Mehrschichtfolie gemäß Anspruch 7, wobei der Beutel versiegelt ist und ein Bleichmittel beinhaltet.

9. Mehrschichtfolie gemäß Anspruch 8, wobei das Bleichmittel Calciumhypochlorit oder Natriumdichlorisocyanurat beinhaltet.

## Revendications

1. Un film multicouche comprenant : (a) une couche d'un premier polymère comprenant des unités polymérisées d'alcool vinylique ; et (b) une couche d'un deuxième polymère sélectionné dans le groupe constitué de copolymères anhydride maléique-isobutylène, de copolymères anhydride maléique-isobutylène neutralisés, de copolymères anhydride maléique-isobutylène modifiés chimiquement, et de mélanges de ceux-ci.

2. Le film multicouche de la revendication 1 dans lequel la couche du premier polymère a une épaisseur de 25 à 500 µm et la couche du deuxième polymère a une épaisseur de 0,1 à 25 µm.

3. Le film multicouche de la revendication 2 dans lequel le deuxième polymère est un copolymère alterné.

4. Le film multicouche de la revendication 3, lequel est un sachet dans lequel une surface intérieure est complètement recouverte du deuxième polymère.

5. Le sachet de la revendication 4 comprenant un agent de blanchiment.

6. Le sachet de la revendication 5 dans lequel l'agent de blanchiment comprend de l'hypochlorite de calcium ou du dichloroisocyanurate de sodium.

7. Le film multicouche de la revendication 1 ou de la revendication 2, lequel est sous la forme d'un sachet dans lequel la couche de polymère comprenant des unités polymérisées d'alcool vinylique est sur l'extérieur du sachet.

8. Le film multicouche de la revendication 7 où le sachet est scellé et comprend un agent de blanchiment.

9. Le film multicouche de la revendication 8 dans lequel l'agent de blanchiment comprend de l'hypochlorite de calcium ou du dichloroisocyanurate de sodium.
